**Europäisches Patentamt**

**European Patent Office**

**Office européen des brevets**

(11) Veröffentlichungsnummer: **0 170 143**

**A2**

# (12) EUROPÄISCHE PATENTANMELDUNG

(21) Anmeldenummer: 85108787.4

(22) Anmeldetag: 13.07.85

(51) Int. Cl.⁴: **G 01 N 30/92**
**B 01 J 20/32**

(30) Priorität: 28.07.84 DE 3427923

(43) Veröffentlichungstag der Anmeldung:
05.02.86 Patentblatt 86/6

(84) Benannte Vertragsstaaten:
BE CH DE FR GB IT LI NL SE

(71) Anmelder: Merck Patent Gesellschaft mit beschränkter
Haftung
Frankfurter Strasse 250
D-6100 Darmstadt(DE)

(72) Erfinder: Hauck, Heinz-Emil, Dr.
Diesterwegstrasse 19
D-6000 Frankfurt am Main(DE)

(72) Erfinder: Jost, Willy, Dr.
Gabelsbergerstrasse 32
D-6070 Langen(DE)

(54) **Trennmaterialien für die Dünnschichtchromatographie.**

(57) Die Erfindung betrifft ein neues Trennmaterial für die
Dünnschichtchromatographie auf Basis von mit Sorptionsmitteln beschichteten Trägermaterialien, bestehend im
wesentlichen aus einer nach der Beschichtung durch Silanisierungsmittel oberflächenmodifizierten Kieselgelschicht,
das dadurch gekennzeichnet ist, daß sich der Bedeckungsgrad definiert und steuerbar einstellen läßt von 0,15 bis 0,8
$\mu mol/m^2$ bei reversed-phase Materialien und 1,2 bis 2,5
$\mu mol/m^2$ bei hydrophilen Materialien, sowie ein Verfahren
zur Herstellung dieser Trennmaterialien.

Croydon Printing Company Ltd.

Trennmaterialien für die Dünnschichtchromatographie

Die Dünnschichtchromatographie (DC) ist aufgrund ihrer Schnelligkeit eine weitverbreitete Analysenmethode. Durch ständige Weiterentwicklungen und Verbesserung konnte ihre Leistungsfähigkeit laufend gesteigert werden. Durch die HPTLC-Technik (High Performance Thin Layer Chromatography) konnten schließlich Ergebnisse erzielt werden, die sich weitgehend auf die Hochdruckflüssigkeitschromatographie (HPLC) übertragen lassen. Sie stellt so eine schnelle und preiswerte Alternative zu der zeitlich und gerätetechnisch aufwendigeren HPLC-Analytik dar. Die Fortschritte der DC/HPTLC-Technik beruhen letztlich auf verbesserten porösen Kieselgelen, die bei der Dünnschichtchromatographie überwiegend als Sorbentien bzw. Trägermaterialien Verwendung finden.

Insbesondere die Einführung von mit organischen Gruppen chemisch modifizierten Kieselgeloberflächen (so z.B. beschrieben in Journal High Resol. Chromatogr. Comm. 3; 215-240, 1980) führte zu einer beträchtlich vergrößerten Anwendungspalette, da es hierdurch möglich wurde, die naturgemäß polaren Si-OH-Gruppen des Kieselgels durch chemische Reaktion mit geeigneten lipophilen oder partiell lipophilen organischen Molekülen umzusetzen, d. h. in hydrophobe (reversed phase) oder partiell hydrophobe Gruppen umzuwandeln.

Eine weitere Bereicherung der DC-Technik stellt die in-situ-Modifizierung, also die chemische Modifizierung auf einer fertigen Kieselgelschicht dar, so wie dies z.B. in der DE-PS-27 12 113 oder der DE-PS-28 09 137 beschrieben

- 2 -

wurde. Dadurch lassen sich unter anderem homogene Pakkungs- und Schichtflächenstrukturen sowie reinere Schichten erzeugen.

Bei den bekannten Herstellungsverfahren von chemisch modifiziertem Kieselgel wird der jeweilige Bedeckungsgrad
des modifizierten Sorbens mit organischen Gruppen überwiegend durch die Art der zur Reaktion mit den Si-OH-
Gruppen des Kieselgelgerüstes befähigten Gruppen des
Modifizierungsreagenz bestimmt. Zur Erzeugung höchstmöglicher Umsetzungsgrade werden als Modifizierungsreagenz
üblicherweise entsprechend substituierte reaktionsfähige
Halogensilane verwendet. Auch der Einsatz von an sich
reaktionsträgen Alkoxysilanen kann offensichtlich gemäß
der DE-PS-24 26 306 bei gleichzeitiger Anwesenheit von
Katalysatoren während der Silanisierung zu recht hohen
Bedeckungsgraden der Kieselgeloberfläche führen. Die
hohen Umsetzungsgrade garantieren zwar eine gute Wechselwirkung zwischen hydrophober Trägermatrix und hydrophober
Substanz, haben aber zur Folge, daß die hydrophob modifizierte Kieselgelschicht durch stark wasserhaltige Fließmittel und Sprühreagenzien nicht mehr benetzbar ist.

Um die geforderte Wasserbenetzbarkeit zu gewährleisten,
muß die Hydrophobie der modifizierten Kieselgelschicht
herabgesetzt werden. Die Verwendung von Halogensilanen
im Unterschuß oder das Mischen von maximal modifiziertem
und unmodifiziertem Kieselgel vor der Beschichtung bringt,
wie die Praxis zeigte, zum Teil erhebliche Nachteile mit
sich. Der üblicherweise praktizierte Weg, die Hydrophobie
von in situ zu modifizierenden Kieselgelschichten dadurch
zu reduzieren, daß zur chemischen Modifizierung reaktionsträge Alkoxy- oder Aralkoxysilane verwendet werden, hat
häufig den Nachteil, daß der Bedeckungsgrad stark erniedrigt wird. Dadurch kommt der eigentliche reversed phase-
Effekt oft nur unzureichend zum Tragen.

Bei der chemischen Modifizierung von Kieselgelschichten mit polar-hydrophile Gruppen enthaltenden organischen Molekülen, wie zum Beispiel Epoxy- oder Aminogruppen tragende Alkylketten, können bekanntermaßen ausschließlich die reaktionsträgen Alkoxy- bzw. Aralkoxysilane zur Modifizierung eingesetzt werden, da die entsprechenden Halogensilane nicht existieren. Derartig modifizierte Kieselgelschichten weisen demnach prinzipiell niedere, zum Teil zu niedrige, Bedeckungsgrade auf. Eine höhere Oberflächenkonzentration wäre bei dieser Art von Modifizierung aber von Vorteil, da die gewünschte Wasserbenetzbarkeit der Schicht aufgrund der eingeführten, teilweise recht polaren Gruppen im Gegensatz zu den rein hydrophob modifizierten Schichten auch bei maximaler Umsetzung in jedem Fall gegeben ist.

Es bestand also die Aufgabe, ein Trennmaterial für die DC auf Basis von Kieselgel als Trägermaterial zu entwickeln, das nach der Modifizierung der Kieselgelschicht mit (hydrophoben) reversed phase-Materialien einerseits einen niedrigen, homogenen Bedeckungsgrad aufweist, der somit die Wasserbenetzbarkeit der Schicht ermöglicht, auf der anderen Seite aber ausreichend hoch ist, um den reversed phase-Effekt im gewünschten Maß wirksam werden zu lassen, so daß sich auch noch recht hydrophobe Substanzen in einem wasserhaltigen Fließmittelsystem chromatographisch auftrennen lassen. Es bestand ein Bedürfnis, den Bedeckungsgrad der wasserbenetzbaren Kieselgelschicht durch die Modifizierungsreaktion gezielt steuern zu können, um so einen breiten Anwendungsbereich zu ermöglichen. Weiterhin bestand die Aufgabe, hydrophil modifizierte DC-Trennmaterialien zu entwickeln, deren durch die Modifizierung ebenfalls steuerbarer Bedeckungsgrad deutlich höher liegt als bei Materialien, die entsprechend DBP 27 12 113 und DBP 28 09 137 hergestellt wurden.

Es wurde nun gefunden, daß eine Vorbehandlung der üblichen HPTLC-Fertigpräparationen mit Lösungen von Katalysatoren vor der eigentlichen in-situ-Modifikation der Kieselgelschicht mit reaktionsträgen Alkoxy- oder Aralkoxysilanen zu äußerst homogenen Bedeckungsgraden der Schicht führt, die deutlich höher liegen als ohne Vorbehandlung, wobei der gesamte Prozeß einschließlich Vorbehandlung ohne Ausschluß von Luftfeuchtigkeit durchgeführt werden kann. Weiterhin wurde überraschenderweise gefunden, daß durch die quantitative und vor allem qualitative Zusammensetzung der Katalysatorlösungen der Bedeckungsgrad erstmalig auf die verschiedensten Werte steuerbar eingestellt werden kann. Dieser Effekt ist nicht nur auf reine (hydrophobe) reversed phase-Materialien beschränkt, sondern kann auch für hydrophile Materialien nutzbar gemacht werden, bei denen sich nun steuerbar größere Oberflächenbedeckungsgrade erzielen lassen. Durch die Erfindung stehen somit Trennmaterialien für die DC zur Verfügung, die spezifisch dem jeweiligen Trennproblem optimal angepaßt werden können. Durch die vornehmbare Feinregulierung des Verhältnisses von hydrophoben und hydrophilen Oberflächenbereiche auf der Kieselgelschicht in Verbindung mit der Möglichkeit, wasserhaltige Fließmittelsysteme einzusetzen, um somit wiederum auf die hydrophob/hydrophilen Wechselwirkungen Einfluß zu nehmen, können hervorragende dünnschichtchromatographische Trennungen erhalten werden.

Diese technische Lösung, die eine Fülle von neuen Möglichkeiten für die DC erschließt, war durch den Stand der Technik nicht nahegelegt. In der DE-PS-24 26 306 wird zwar ein Verfahren zur Erhöhung der Oberflächenkonzentration von Modifizierungsreagenz durch Silanisierung von Hydroxylgruppen tragenden, pulverförmigen Festkörpern in

- 5 -

Gegenwart von Katalysatoren unter Ausschluß von Feuchtigkeit beschrieben; für den Fachmann ist aber daraus die erfindungsgemäße technische Lehre, insbesondere die Steuerbarkeit des Bedeckungsgrades, weder zu entnehmen noch zu folgern.

Gegenstand der Erfindung ist demgemäß ein neues Trennmaterial für die Dünnschichtchromatographie auf Basis von mit Sorptionsmitteln beschichteten Trägermaterialien, bestehend aus einer nach der Beschichtung durch Silanisierungsmittel oberflächenmodifizierten Kieselgelschicht, das dadurch gekennzeichnet ist, daß die wasserbenetzbare Kieselgeloberfläche eine gleichmäßige Bedeckung von 0,15 bis 0,8 $\mu$mol/m² bei reversed phase (RP) Materialien oder 1,2 bis 2,5 $\mu$mol/m² bei hydrophilen Materialien aufweist. Bevorzugt ist dabei ein entsprechendes Trennmaterial, das eine gleichmäßige Bedeckung der wasserbenetzbaren Kieselgelschicht bei auf C18-Alkylketten basierenden reversed phase-Materialien (RP 18) von 0,3 bis 0,5 $\mu$mol/m² und bei auf C8-Alkylketten basierenden reversed phase-Materialien (RP 8) von 0,35 bis 0,7 $\mu$mol/m² aufweist, sowie ein Trennmaterial, das eine gleichmäßige Bedeckung bei hydrophilen Materialien von 1,5 bis 2,3 $\mu$mol/m² aufweist.

Gegenstand der Erfindung ist weiterhin ein Verfahren zur Herstellung dieser Trennmaterialien, das darin besteht, daß man die zu modifizierende, wasserbenetzbare Kieselgeloberfläche vor der Behandlung mit Silanisierungsmittel durch Tränkung mit einer Lösung von Katalysatoren, die bekanntermaßen Silanisierungsreaktionen von Kieselgelen zu katalysieren vermögen, homogen dotiert. Bevorzugt ist dabei ein Verfahren, bei dem die Dotierung und Modifizierung ohne Ausschluß von Feuchtigkeit durchgeführt wird.

Weiterhin wird ein Verfahren bevorzugt, das darin besteht, daß man im Hinblick auf die gewünschte Steuerung der Oberflächenmodifizierung abgestimmte Katalysatorlösung in einem Konzentrationsbereich von vorzugsweise 0,01-20 Gew.% verwendet. Ferner sind Verfahren bevorzugt, die darin bestehen, daß zur Herstellung der erfindungsgemäßen Trennmaterialien Alkoxy- oder Aralkoxysilane als Silanisierungsmittel verwendet werden. Gegenstand der Erfindung ist schließlich ein Verfahren zur Herstellung von erfindungsgemäßen Trennmaterialien, bei dem vorzugsweise als Katalysator eine Mischung aus Acetylchlorid und Eisessig verwendet wird, sowie ein Verfahren, bei dem als Katalysator Tri-, Di- oder Monochlor- bzw. -fluoressigsäure eingesetzt wird.

Die erfindungsgemäßen Trennmaterialien weisen eine durch ihre Herstellung einstellbare definierte Bedeckung durch hydrophobe, hydrophile bzw. partiell hydrophob/hydrophile Reste auf, die sich durch große Gleichmäßigkeit auszeichnet.

Der Bedeckungsgrad variiert von 0,15 bis 0,8 $\mu mol/m^2$ bei reversed phase-Materialien (RP), vorzugsweise 0,3 bis 0,5 $\mu mol/m^2$ bei auf C18-Alkylketten basierenden reversed phase-Materialien bzw. 0,35 bis 0,7 $\mu mol/m^2$ bei auf C8-Alkylketten basierenden reversed phase-Materialien, und 1,2 bis 2,5 $\mu mol/m^2$ vorzugsweise 1,5 bis 2,3 $\mu mol/m^2$ bei hydrophilen Materialien.

Der Oberflächenbedeckungsgrad $\Gamma$ ($\mu mol/m^2$) wird hierbei nach Kováts definiert (Adv. in Colloid und Interface Science 6, (1976), 95-137). Die erfindungsgemäßen Trennmaterialien können auch durch ihren Umsetzungsgrad charakterisiert werden. Er wird in % angegeben und bezieht sich auf den maximal erreichbaren Bedeckungsgrad, der vor allem aufgrund sterischer Einflüsse auf ca. 4 $\mu$mol/m² limitiert ist.

Für reversed phase-Materialien können Bedeckungsgrade beliebig unter dem nach dem Stand der Technik maximal erreichbaren Bedeckungsgrad erzielt werden, wodurch die Hydrophobie der modifizierten Kieselgeloberfläche herabgesetzt wird. Die erfindungsgemäßen Trennmaterialien weisen so in den definierten Bereichen noch Wasserbenetzbarkeit auf. Für hydrophil modifizierte Schichten, bei denen also die aliphatische bzw. arylaliphatische Kette durch polare Gruppen, zum Beispiel Epoxy oder Amino, substituiert ist, können Trennmaterialien erhalten werden, deren Bedeckungsgrad deutlich höher eingestellt werden kann als dies bislang für derartig modifizierte Schichten (gemäß DBP 27 12 113 und DBP 28 09 137) möglich war.

Durch die erfindungsgemäß modifizierten Kieselgelschichten wird somit die Palette der Trennmaterialien für die Dünnschichtchromatographie ganz erheblich verbreitert.

Die erfindungsgemäßen Trennmaterialien besitzen überdies die gleichen Vorteile der in situ modifizierten Trennmaterialien der DBP 27 12 113 und DBP 28 09 137, zeichnen sich also aus durch eine hervorragende Reproduzierbarkeit, Unempfindlichkeit gegenüber dem Wassergehalt der Schicht und Luftfeuchtigkeit, hohe Reinheit der Schicht, homogene Packungs- und Schichtoberflächenstruktur sowie geringere Probleme bei der Herstellung insbesondere im Produktionsmaßstab.

Die Herstellung der erfindungsgemäßen HPTLC-Trennmaterialien ist auf eine überraschende und höchst einfache Weise möglich. Dazu werden die Fertigschichten - im Gegensatz zur DE-PS-24 26 306 - vor der eigentlichen Umsetzung mit Silanen mit Katalysatorlösungen homogen dotiert.

Als Katalysatoren eignen sich grundsätzlich alle, die bekanntermaßen Silanisierungsreaktionen von Kieselgelen zu katalysieren vermögen. Dem Fachmann steht aus der einschlägigen Literatur eine breite Palette zur Verfügung, geeignet sind beispielsweise anorganische und organische Säuren, deren reaktionsfähige Derivate sowie anorganische und organische Basen. Vorzugsweise werden anorganische und organische Säuren und deren reaktionsfähige Derivate eingesetzt. Auch substituierte organische Säuren eignen sich bestens.

Als Beispiele für in Frage kommende anorganische Säuren seien im einzelnen genannt: HCl, HBr, HJ, HF, $H_2SO_4$, $HNO_3$, $H_3PO_4$, $H_3BO_3$, $HClO_4$, $HBrO_4$, $HJO_4$ oder auch Mischungen von zwei oder mehreren Einzelkomponenten. Insbesondere eignen sich alle Halogenwasserstoffe. Als organische Säuren kommen beispielsweise Carbonsäuren oder substituierte Carbonsäuren, Sulfonsäuren oder Aminosäuren, vorzugsweise aber Carbonsäuren und ihre Substitutions-Derivate in Frage, wobei auch Mischungen verschiedener Einzelkomponenten möglich sind. Als bevorzugte Beispiele für in Frage kommende Carbonsäuren bzw. substituierte Carbonsäuren seien genannt: Ameisensäure, Essigsäure, Propionsäure, Buttersäure, Valeriansäure, Capronsäure, Mono-, Di- oder Trichloressigsäure oder Mono-, Di- und Trifluoressigsäure. Besonders bevorzugt sind Essigsäure sowie die fluorierten und chlorierten Essigsäuren.

– 9 –

Als reaktionsfähige Derivate der bevorzugten Carbonsäuren eignen sich insbesondere die Säurehalogenide, vorzugsweise die Chloride und Bromide, wie Acetylchlorid oder Acetylbromid, ferner die entsprechenden Anhydride, Azide oder Ester.

Weiterhin sind Mischungen aus einer oder mehreren Carbonsäuren und/oder einem oder mehreren reaktionsfähigen Säurederivaten, insbesondere Säurehalogeniden vorzüglich geeignet. Im einzelnen seien beispielhaft Katalysatorsysteme genannt, bestehend aus Acetylchlorid/Essigsäure, Acetylchlorid/Propionsäure, Propionylchlorid/Essigsäure, Propionylchlorid/Propionsäure, Acetylchlorid/Ameisensäure, Acetylchlorid/Buttersäure, Butyrylchlorid/Essigsäure, Butyrylchlorid/Propionsäure, Butyrylchlorid/Ameisensäure, Acetylchlorid/Valeriansäure, Valerylchlorid/Valeriansäure, Propionylchlorid/Buttersäure, Propionylchlorid/Valeriansäure, Formylchlorid/Ameisensäure, Formylchlorid/Essigsäure, Acetylchlorid/Essigsäure/Propionsäure, Acetylchlorid/Essigsäure/Ameisensäure, Acetylchlorid/Propionylchlorid/Essigsäure, Acetylchlorid/Propionylchlorid/Propionsäure und Acetylchlorid/Propionylchlorid/Ameisensäure.

Anstelle der Säuren in den genannten Mischungen können auch entsprechend substituierte Säuren, vorzugsweise die mono-, di- oder trifluor – oder -chlorsubstituierten Säuren eingesetzt werden. Besonders bevorzugt sind Katalysatormischungen, bestehend aus Acetylchlorid und Essigsäure.

Als anorganische Base eignet sich vorzugsweise Ammoniak. Als in Frage kommende organische Basen seien exemplarisch Pyridin, Di- und Triethylamin, Butylamin oder Ethylendiamin genannt.

- 10 -

Die Katalysatoren können konzentriert, gegebenenfalls in gas- oder dampfförmigem Zustand oder in Lösungen, vorzugsweise in verdünnten Lösungen, vorliegen. Als Lösungsmittel eignen sich vorzugsweise organische, gegebenenfalls mit Wasser mischbare Lösungsmittel, insbesondere polare organische Lösungsmittel, so Alkohole wie beispielsweise Methanol, Ethanol, n-Propanol, iso-Propanol, n-Butanol, Methylpropylalkohol, aber auch Aceton, Methylethylketon oder weniger polare Lösungsmittel wie Dioxan, Methylenchlorid, Di- und Trichlorethan oder schließlich unpolare Lösungsmittel wie Benzol, Nitrobenzol, Toluol, Xylol, n-Hexan oder n-Heptan, vorausgesetzt, die Katalysatoren bzw. Katalysatorkomponenten zeigen eine ausreichende Löslichkeit in den entsprechenden Lösungsmitteln bzw. lassen sich mit ihnen hinreichend mischen. Die Lösungsmittel können getrocknet oder auch mit bestimmten Wassergehalten eingesetzt werden.

Die Konzentration des Katalysators bzw. der Katalysatoren im Lösungsmittel variiert zwischen 0,01 % bis 20 Gew.%, bezogen auf die Tränklösung. Vorzugsweise beträgt die Konzentration 0,05 bis 10 %. Bei starken Säuren oder Basen wird vorzugsweise eine niedere, bei schwachen Säuren oder Basen vorzugsweise eine höhere Konzentration gewählt. Bei Katalysatormischungen kann das relative Verhältnis der Einzelkomponenten zueinander im weiten Bereich variiert werden. Bei Zweikomponentensystemen werden vorzugsweise Relationen zwischen 1:9 und 9:1, insbesondere 1:9, 2:8, 3:7, 4:6, 5:5, 6:4, 7:3, 8:2 und 9:1 eingestellt.

- 11 -

Die Dotierungszeit mit der Katalysatorlösung liegt zwischen 1 Minute und 20 Minuten, vorzugsweise zwischen 8 und 12 Minuten. Eine Kieselgelplatte wird vorzugsweise in 0,8-1,0 Liter Katalysatorlösung dotiert. Die sich auf den noch nicht modifizierten, oberflächenaktiven Kieselgelplatten einstellenden Wassergehalte haben keinen Einfluß auf den sich jeweils ergebenden Umsetzungsgrad bei der Modifizierung. Ein Vortrocknen bzw. Aktivieren der Platten ist nicht erforderlich. Luftfeuchtigkeit braucht nicht ausgeschlossen zu werden, im Gegensatz zum Verfahren der DE-PS 24 26 306. Nach der Vordotierung der Platten mit Katalysatorlösung erfolgt entweder direkt die Modifizierung oder aber vorzugsweise ein ein- oder mehrfacher Waschvorgang, um Katalysatorüberschüsse zu entfernen. Dies ist nach dem in der DE-PS 24 26 306 beschriebenen Verfahren nicht möglich. Für die Waschprozesse werden üblicherweise die genannten Lösungsmittel verwendet. Das Lösungsmittelvolumen pro Waschung und Platte beträgt vorzugsweise 0,7-1,0 Liter. Die Platten werden vorzugsweise 8-12 Minuten pro Waschung der Waschlösung ausgesetzt.

Die der Dotierung mit Katalysator sich anschließende chemische Modifizierung der Kieselgelschicht erfolgt in an sich bekannter Weise (z.B. DE-OS-17 12 113). Die Modifizierung verläuft dabei so, daß die Kieselgelschicht mit dem Silanisierungsmittel imprägniert bzw. getränkt wird. Dieses kann zum Beispiel dadurch geschehen, daß das Ausgangsmaterial in die Lösung des Silanisierungsmittels eingetaucht wird oder aber mit einer solchen Lösung besprüht wird. Als Lösungsmittel wird ein übliches, gegenüber dem verwendeten Silanisierungsmittel inertes Lösungs-

- 12 -

mittel verwendet. Vorzugsweise verwendet man organische
Lösungsmittel mit Siedepunkten zwischen 30 und 180 °C,
zum Beispiel chlorierte Kohlenwasserstoffe wie Di- und
Trichlormethan und/oder Di- und Trichloräthan oder aromatische oder aliphatische Kohlenwasserstoffe.

Als Silanisierungsmittel werden reaktionsträge Alkoxy-
oder Aralkoxysilane vom Typ R-SiX$_3$ verwendet, wobei R
bei (hydrophober) reversed-phase-Modifizierung eine unsubstituierte Alkyl- oder Aralkylgruppe, bei hydrophiler
Modifizierung eine mit polaren Gruppen substituierte
Alkyl- oder Aralkylgruppe darstellt. X kann Alkoxy,
Aralkoxy oder Alkyl bedeuten, wobei jedoch mindestens
ein X pro Molekül Silan Alkoxy oder Aralkoxy sein muß.

R kann 1-20 C-Atome in der gegebenenfalls verzweigten
Alkylkette aufweisen, bevorzugt sind Alkylketten aus 8 bzw. 18 C-Atomen.

Falls R im Falle hydrophiler Modifizierung mit polaren
Gruppen substituiert ist, kommen als Substituenten zum
Beispiel Hydroxy, Amino, Epoxy, Cyano, Halogen, Ammonium,
Sulfonium oder Carboxy in Betracht. Vorzugsweise werden
Epoxy- oder Aminogruppen als Substituenten eingesetzt.
Silanisierungsmittel sind in großer Zahl aus der Literatur bekannt oder können in Analogie zu bekannten Methoden
hergestellt werden. Sie sind für das erfindungsgemäße
Verfahren in gleicher Weise geeignet wie für die bekannten Modifizierungen von Oberflächen von Sorbentien. Die
Menge des zur Oberflächenmodifizierung verwendeten Silanisierungsmittels richtet sich vor allem nach der Dicke
der Kieselgelschicht und der spezifischen Oberfläche des
zur Beschichtung verwendeten Kieselgels. Um eine voll-

- 13 -

ständige Abdeckung der zugänglichen Silanol-Gruppen des unbehandelten Kieselgels zu erhalten, sollte das Silanisierungsmittel in einer Menge von mindestens 10 µMol/m² Kieselgeloberfläche eingesetzt werden. Vorzugsweise wird man jedoch einen Überschuß des Silanisierungsmittels verwenden, zum Beispiel 0,1 bis 1 mMol/m². Auch ein größerer Überschuß kann in bestimmten Fällen von Vorteil sein. Nach der Imprägnierung mit dem Silanisierungsmittel läßt man die Trennmaterialien abtropfen und führt anschließend mehrere Reinigungsbäder durch, um überschüssiges Silanisierungsmittel zu entfernen und die modifizierte Schicht aufzureinigen. Die erforderlichen Waschprozesse orientieren sich im wesentlichen an dem bereits in den Patentschriften 27 12 113 und 28 09 137 beschriebenen Verfahren.

Als Ausgangsmaterialien können alle gebräuchlichen Trennmaterialien mit einer DC-Kieselgelschicht auf Trägern verwendet werden, so auch das Hochleistungstrennmaterial, wie es zum Beispiel in der DOS 25 24 065 beschrieben ist. Als Träger können alle üblichen Materialien verwendet werden, wobei Glasplatten bevorzugt sind. Gebräuchlich sind jedoch auch Folien, zum Beispiel aus Aluminium oder auch Kunststoffolien. Die Kieselgelschicht ist auf diese Trägermaterialien in Form einer streichfähigen, meist wäßrigen Suspension mit üblichen Streichgeräten bzw. Beschichtungsanlagen aufgebracht. Dieser Suspension werden noch Bindemittel, die die Haft- und Abriebfestigkeit erhöhen, und gegebenenfalls Indikatoren zugesetzt. Als Bindemittel sind bevorzugt die in der deutschen Patentschrift 1 442 446 oder die in der DAS 1 517 929 genannten organischen Bindemittel. Der am häufigsten verwendete Indikator ist ein Fluoreszenzindikator, vorzugsweise das bei 254 nm im UV absorbierende Magnesiumwolframat (DBP 28 16 574). Die Bindemittel werden in der Regel in Mengen von 0,1 bis etwa 10 % zugesetzt, die Indikatoren in Mengen von etwa 0,5 bis 5 Gew.%. Die Schichtdicke der Kieselgelschicht der erfindungsgemäßen Trennmaterialien liegt wie bei den bisher üblichen DC-Trennmaterialien normalerweise in einer Größenordnung von 100 bis 300 µm. In Ausnahmefällen oder für spezielle Anwendungen können jedoch auch Trennmaterialien mit dünneren oder dickeren Schichten hergestellt werden. Die spezifische Oberfläche der Kieselgele liegt zwischen etwa 1 und 1000 m²/g, in den meisten Fällen zwischen 200 und 800 m²/g.

Die Wasserbenetzbarkeit der erfindungsgemäß modifizierten Kieselgelschichten hängt unter anderem von der jeweiligen Phase ab, mit der die Schicht modifiziert worden ist. RP-18-Materialien (unsubstituiertes geradkettiges Alkyl mit 18 C-Atomen) sind in der Regel bei einem Bedeckungsgrad von ca. 0,55 µmol/m² noch wasserbenetzbar, RP-8-Materialien (unsubstituiertes geradkettiges Alkyl mit 8 C-Atomen) bei einem Bedeckungsgrad von ca. 0,7 µmol/m².

Steuerparameter für die entsprechend einstellbaren erfindungsgemäßen Trennmaterialien sind im wesentlichen Art und Zusammensetzung der Katalysatorlösungen bzw. Katalysatormischungen. Der Fachmann kann die Dotierung je nach dem gewünschten Endprodukt auswählen bzw. durch routinemäßiges Ausprobieren die jeweils geeignetsten Lösungen zusammenstellen. Tabelle 1 zeigt die erzielbaren Bedeckungsgrade der erfindungsgemäß modifizierten Trennmaterialien in Abhängigkeit von bei ihrer Herstellung exemplarisch verwendeten Katalysatoren/Lösungsmitteln bei unterschiedlich modifizierten Kieselgelschichten. Zum Vergleich sind die entsprechenden Werte für HPTLC-Trenn-

- 15 -

materialien angegeben, die gemäß den DBP 27 12 113 und 28 09 137 hergestellt wurden. Die angegebenen Bedingungen sind rein beispielhaft zu verstehen, sollen also keinerlei Einschränkungen bedeuten. Die bezugnehmenden Beispiele sind als Referenz angegeben.

Aus Tabelle 1 ist ersichtlich, daß Trennmaterialien mit sowohl niedrigeren (RP-18, RP-8) als auch höheren Bedeckungsgraden (DIOL) im Vergleich zum Stand der Technik erhalten werden können. Besonders bemerkenswert ist der sehr hohe Bedeckungsgrad für das DIOL-modifizierte Trennmaterial.

Tabelle 2 zeigt, daß auch die für die Katalysatoren erforderlichen Lösungsmittel bei ansonsten gleichen Bedingungen einen Einfluß auf den Bedeckungsgrad nehmen können. Die angegebenen Lösungsmittel sind rein beispielhaft aufzufassen.

Tabelle 3 gibt die Bedeckungs- bzw. Umsetzungsgrade von Trennmaterialien wieder, bei deren Herstellung verschiedene Katalysatoren bei ansonsten identischen Bedingungen (Beispiel 2) zur Modifizierung verwendet werden. Die Auswahl der Katalysatoren und ihre Konzentration ist auch hier rein exemplarisch zu verstehen. Der Einfluß der Art des Katalysators auf den Bedeckungsgrad der erfindungsgemäßen Trennmaterialien ist, wie aus Tabelle 3 zu entnehmen ist, von übergeordneter Bedeutung. Der Bedeckungsgrad läßt sich so entsprechend steuern, wie dies aus dem Beispiel der chlorierten und fluorierten Essigsäure besonders gut zum Ausdruck kommt.

- 16 -

Überraschenderweise bewirken Katalysatorsysteme, bestehend aus zwei oder mehr Katalysatorkomponenten, eine erstaunlich große Varianz in der Steuerbarkeit des Bedeckungsgrades, je nach dem, in welchem Verhältnis die Einzelkomponenten zueinander eingesetzt werden. Tabelle 4 stellt als Beispiel eine Korrelation her zwischen dem Verhältnis von Acetylchlorid und Eisessig, die beide einzeln als Katalysatoren verwendet werden können, und dem im direkten Zusammenhang mit dem Bedeckungsgrad stehenden Kohlenstoffgehalt eines RP-18 HPTLC-Trennmaterials. Solche Katalysatorsysteme zeigen bezüglich des Bedeckungsgrades oft synergetische Effekte, vergleicht man ihre Wirkung mit der der Einzelkomponenten.

Die variable Gestaltung des Bedeckungsgrades und damit der Hydrophobie der aktiven Kieselgeloberfläche ermöglicht es, eine erheblich größere Anzahl von hydrophob-hydrophilen Substanzen und Stoffgemischen dünnschichtchromatographisch zu trennen. Es stehen somit problemspezifische Trennmaterialien zur Verfügung. Die Anwendungsbreite kann überdies vergrößert werden durch die Möglichkeit, wasserhaltige Fließmittelsysteme einzusetzen. Hierdurch ist eine zusätzliche Feinregulierung des Trennverhaltens gegeben. Durch die erfindungsgemäßen Trennmaterialien wird somit der Anwendungsbereich der Dünnschichtchromatographie entscheidend vergrößert.

Beispiele

Die nachfolgend aufgeführten Beispiele unterscheiden sich nur in der Art und Zusammensetzung des verwendeten Katalysators und der Art der eingesetzten Silane.

Es wurden in allen Fällen HPTLC-Fertigplatten Kieselgel 60 F 254s, 10 x 20 cm von E. Merck, Darmstadt, verwendet. Als Tauchbehälter kamen für alle durchgeführten Herstellungsschritte Trennkammern der Fa. Desaga aus Glas zur Anwendung.

Das allgemeingültige Herstellungsschema sieht wie folgt aus:

a) Dotierung der Platten mit dem Katalysator bzw. Katalysatorgemisch durch Eintauchen in eine entsprechende Lösung

b) Eintauchen der Platten in ein entsprechendes organisches Lösungsmittel zur Entfernung überschüssiger Katalysatormengen

c) Modifizierung der Platten durch Eintauchen in die entsprechende Silanlösung

d) Mehrere aufeinanderfolgende Waschprozesse durch Eintauchen der Platten in entsprechende Lösungsmittel und/oder Lösungsmittelgemische unterschiedlicher Polarität.

Beispiel 1

Herstellung einer gut wasserbenetzbaren HPTLC-Fertigschicht RP-18

zu a)    Dotierung einer HPTLC-Fertigplatte Kieselgel 60 F 254s mit einer Lösung von 0,9 ml konz. HCl in 900 ml Methanol (= 0,04 % HCl) in 10 Minuten.

zu b)    Zwischenwaschungen von jeweils 10 Minuten Dauer in 900 ml Methanol und anschl. in 900 ml Toluol.

zu c)    Silanisierung in 900 ml einer 10 %igen toluolischen Lösung von Methyloctadecyldimethoxysilan innerhalb von 20 Minuten.

zu d)    Waschungen der Platten von jeweils 10 Minuten Dauer mit 2x je 900 ml Toluol, 900 ml Dichlormethan/Methanol (1/1), 2x je 900 ml Aceton/ Wasser (1/1) und 900 ml Methanol.

Beispiel 2

Herstellung einer gerade noch wasserbenetzbaren HPTLC-Fertigplatte RP-18

zu a)    Dotierung einer HPTLC-Platte KG 60 mit einer Lösung, bestehend aus 63 ml Acetylchlorid und 27 ml Eisessig in 900 ml Toluol (Relation 7:3, 10 % Gesamtkonzentration) in 10 Minuten.

zu b)    Zwischenwaschungen von 10 Minuten Dauer mit 900 ml Toluol.

zu c)    analog Beispiel 1.

zu d)    analog Beispiel 1.


Beispiel 3


Herstellung einer gut wasserbenetzbaren HPTLC-Fertigplatte RP-18


zu a)    Dotierung einer HPTLC-Platte KG 60 mit einer
Lösung, bestehend aus 81 ml Acetylchlorid und
9 ml Eisessig in 900 ml Toluol (Relation 9:1,
10 % Gesamtkonzentration) in 10 Minuten.


zu b,
c und d)    analog Beispiel 2.


Beispiel 4


Herstellung einer gerade noch wasserbenetzbaren HPTLC-
Fertigplatte RP-8


zu a, b)    analog Beispiel 2.


zu c)    Verwendung von Methyloctyldimethoxysilan, ansonsten analog Beispiel 2.


zu d)    analog Beispiel 2.


Beispiel 5


Herstellung einer HPTLC-Fertigplatte Diol


zu a)    Dotierung einer HPTLC-Platte KG 60 mit einer
Lösung, bestehend aus 4,5 ml Trichloressigsäure
in 900 ml Toluol (0,5 % Gesamtkonzentration) in
10 Minuten.

zu b)     Zwischenwaschung entfällt.

zu c)     Silanisierung mit 900 ml einer 10 %igen toluo-
          lischen Lösung von γ-Glycidyloxypropyltrimeth-
          oxysilan innerhalb von 20 Minuten.

zu d)     analog Beispiel 2.

Tabelle 1

| Trenn-material HPTLC | Katalysator/ Lösungsmittel | Bedek-kungs-grad $\Gamma$ ($\mu mol/m^2$) | Umsetzungs-grad (%) | Referenz |
|---|---|---|---|---|
| RP-18 | ---------------- | 2,05 | 51,0 | DBP 27 12 113<br>DBP 28 09 137 |
| RP-18 | 0,04 % HCl in $CH_3OH$ | 0,36 | 9,0 | Beisp. 1 |
| RP-18 | 10 % Acetylchlorid/ Eisessig (7:3) in Toluol | 0,61 | 15,0 | Beisp. 2 |
| RP-8 | ---------------- | 2,94 | 77,0 | DBP 27 12 113<br>DBP 28 09 137 |
| RP-8 | 10 % Acetylchlorid/ Eisessig (7:3) in Toluol | 0,74 | 19,0 | Beisp. 4 |
| DIOL | ---------------- | 0,64 | 16,3 | DBP 27 12 113<br>DBP 28 09 137 |
| DIOL | 0,5 % Trichlor-essigsäure in Toluol | 1,81 | 46,5 | Beisp. 5 |

PAT LOG 7/1 260784

Tabelle 2

| Lösungsmittel | Bedeckungsgrad $\Gamma$ ($\mu mol/m^2$) | Umsetzungsgrad (%) |
|---|---|---|
| n-Heptan | 0,31 | 7,8 |
| Toluol | 0,6 | 15,0 |
| Dichlormethan | 0,57 | 14,8 |

Tabelle 3

| Katalysator | Bedeckungsgrad $\Gamma$ ($\mu$mol/m$^2$) | Umsetzungsgrad (%) |
|---|---|---|
| 0,04 % HCl in Methanol | 0,36 | 9,0 |
| 10 % Acetylchlorid in Toluol | 0,18 | 4,5 |
| 10 % Eisessig in Toluol | 0,25 | 6,2 |
| 10 % Propionsäure in Toluol | 0,18 | 4,5 |
| 10 % Trifluoressigsäure in Toluol | 1,05 | 26,2 |
| 10 % Trichloressigsäure in Toluol | 1,01 | 25,2 |
| 10 % Dichloressigsäure in Toluol | 0,76 | 19,0 |
| 100 g Monochloressigsäure in 1 l Toluol | 0,52 | 13,0 |

Tabelle 4

| Acetylchlorid/Eisessig 10 %ig in Toluol | 1:9 | 3:7 | 5:5 | 6:4 | 8:2 | 9:1 |
|---|---|---|---|---|---|---|
| % C | 14,5 | 10,2 | 6,9 | 6,5 | 6,2 | 6,1 |

Merck Patent Gesellschaft
mit beschränkter Haftung
   D a r m s t a d t


Patentansprüche:

1.  Trennmaterial für die Dünnschichtchromatographie
    auf Basis von mit Sorptionsmitteln beschichteten
    Trägermaterialien, bestehend im wesentlichen aus
    einer nach der Beschichtung durch Silanisierungsmittel oberflächenmodifizierten Kieselgelschicht,
    dadurch gekennzeichnet, daß die wasserbenetzbare
    Kieselgeloberfläche eine gleichmäßige Bedeckung
    von

    a)  0,15 bis 0,8 $\mu$mol/m$^2$ bei reversed-phase (RP)
        Materialien oder

    b)  1,2 bis 2,5 $\mu$mol/m$^2$ bei hydrophilen Materialien

    aufweist.

2.  Trennmaterial für die DC nach Anspruch 1, dadurch
    gekennzeichnet, daß die gleichmäßige Bedeckung der
    wasserbenetzbaren Kieselgelschicht bei reversed
    phase Materialien auf Basis von C 18-Alkylketten
    (RP 18) 0,3 bis 0,5 $\mu$mol/m$^2$ beträgt.

3.  Trennmaterial für die DC nach Anspruch 1, dadurch
    gekennzeichnet, daß die gleichmäßige Bedeckung der
    wasserbenetzbaren Kieselgelschicht bei reversed
    phase Materialien auf Basis von C 8-Alkylketten
    (RP 8) 0,35 bis 0,7 $\mu$mol/m$^2$ beträgt.


PAT LOG 7/2 110784

4. Trennmaterial für die DC nach Anspruch 1, dadurch gekennzeichnet, daß die gleichmäßige Bedeckung bei hydrophilen Materialien 1,5 bis 2,3 $\mu mol/m^2$ beträgt.

5. Verfahren zur Herstellung von Trennmaterialien für die Dünnschichtchromatographie auf Basis von mit Sorptionsmitteln beschichteten Trägermaterialien durch Oberflächenmodifizierung von Kieselgelschichten mit Hilfe von Silanisierungsmitteln, dadurch gekennzeichnet, daß man die zu modifizierende, wasserbenetzbare Kieselgeloberfläche vor der Behandlung mit Silanisierungsmittel durch Tränkung mit einer Lösung von Katalysatoren, die bekanntermaßen Silanisierungsreaktionen von Kieselgelen zu katalysieren vermögen, homogen dotiert.

6. Verfahren nach Anspruch 5, dadurch gekennzeichnet, daß man die Dotierung und Modifizierung ohne Ausschluß von Feuchtigkeit durchführt.

7. Verfahren nach Anspruch 5 und 6, dadurch gekennzeichnet, daß man im Hinblick auf die gewünschte Steuerung der Oberflächenmodifizierung abgestimmte Katalysatorlösungen verwendet.

8. Verfahren nach den Ansprüchen 5 bis 7, dadurch gekennzeichnet, daß die Katalysatorenkonzentrationen in der Tränklösung 0,01 bis 20 Gew.% beträgt.

9. Verfahren nach mindestens einem der Ansprüche 5 bis 8, dadurch gekennzeichnet, daß man zwischen Dotierung und Modifizierung mindestens eine Zwischenwaschung zur Ausschaltung überschüssiger Katalysatormengen einschaltet.

10. Verfahren nach Anspruch 5, dadurch gekennzeichnet, daß man zur Herstellung von Trennmaterialien mit einem Belegungsgrad von 0,15 bis 0,80 µmol/m$^2$ Silane vom Typ R-SiX$_3$ verwendet,

wobei R unsubstituiertes Alkyl, Aryl oder Aralkyl mit 1 bis 20 C-Atomen in der Alkylkette und

X Alkoxy oder Alkyl mit 1 bis 20 C-Atomen in der Alkylkette bedeuten, mit der Maßgabe, daß mindestens ein X Alkoxy oder Aralkoxy ist.

11. Verfahren nach Anspruch 5, dadurch gekennzeichnet, daß man zur Herstellung von Trennmaterial mit einem Belegungsgrad von 1,2 bis 2,5 µmol/m$^2$ Silane vom Typ R-SiX$_3$ verwendet,

wobei R Alkyl, Aryl oder Aralkyl, enthaltend jeweils mindestens eine Epoxy- oder Aminogruppe und

X Alkoxy oder Alkyl mit 1-20 C-Atomen in der Alkylkette, mit der Maßgabe, daß mindestens ein X Alkoxy oder Aralkoxy ist,

bedeuten.

12. Verfahren nach Anspruch 11, dadurch gekennzeichnet, daß zusätzlich die Epoxygruppen nach der Modifizierung der Oberfläche durch Behandlung mit verdünnter Säure in Diol-Gruppen überführt werden.

13. Verfahren nach Anspruch 10, dadurch gekennzeichnet, daß als Katalysator eine Mischung aus Acetylchlorid und Eisessig verwendet wird.

14. Verfahren nach Anspruch 11, dadurch gekennzeichnet, daß als Katalysator Tri-, Di- oder Monochlor- bzw. -fluoressigsäure verwendet werden.

15. Trennmaterial, hergestellt nach einem der Ansprüche 5-14.